# EUROPÄISCHE PATENTSCHRIFT

(11) **EP 0 860 630 B1**
(45) Veröffentlichungstag und Bekanntmachung des Hinweises auf die Patenterteilung: **27.03.2002**
(21) Anmeldenummer: 97121432.5
(22) Anmeldetag: 05.12.1997
(51) Int. Cl.: F16H 59/02, B60K 20/02

(54) **Lagergehäuse für eine Getriebeschaltvorrichtung**
Support casing for a gear shift device
Boîte de support pour un dispositif de changement de vitesses

(30) Priorität: 20.02.1997 DE 19706715
(43) Veröffentlichungstag der Anmeldung: 26.08.1998
(73) Patentinhaber: Volkswagen Aktiengesellschaft, 38436 Wolfsburg (DE)
(72) Erfinder: Chamilew, Thomas, 38550 Isenbüttel (DE)

(56) Entgegenhaltungen:
- EP-A- 0 036 925
- DE-A- 3 829 559
- BENDA TH: "STRUKTUROPTIMIERUNG EINES SCHALTUNGSGEHAEUSES" ATZ AUTOMOBILTECHNISCHE ZEITSCHRIFT, Bd. 99, Nr. 7/08, 1. Juli 1997 (1997-07-01), Seiten 456-459, XP000704419
- PATENT ABSTRACTS OF JAPAN vol. 095, no. 003, 28. April 1995 (1995-04-28) & JP 06 344788 A (HONDA MOTOR CO LTD), 20. Dezember 1994 (1994-12-20) & JP 06 344788 A (HONDA) 20. Dezember 1994 (1994-12-20)

## Beschreibung

Die Erfindung betrifft ein Lagergehäuse für Getriebeschaltvorrichtungen gemäß dem Oberbegriff des Patentanspruchs 1.

Derartige Vorrichtungen sind in der Regel im Innenraum eines Fahrzeuges befestigt und verfügen über eine Lagerstelle für einen Getriebeschalt- oder Wählhebel. Zu Dicht- und/oder Schutzzwecken umfaßt dabei häufig eine Gummi- oder Kunststoffmanschette das Lagergehäuse und den Schalt- bzw. Wählhebel.

So ist beispielsweise aus der DE-C1 43 42 443 ein zweiteiliges Lagergehäuse aus Kunststoff bekannt, das aus einem Gehäuseoberteil und einem Gehäuseunterteil besteht, die miteinander verbunden sind. Die beiden Gehäuseteile bilden so einen Innenraum mit einer oberen Öffnung, in der zwei kalottenartig ausgebildete Halteschalen zur Aufnahme des Getriebeschalthebels angeordnet sind.

Außerdem ist aus der EP-A1 704 336 ein Lagergehäuse für eine Getriebeschaltvorrichtung aus Kunststoff bekannt, das als homogenes Kunststoffbauteil ausgeführt und mit geschlossenen Seiten- und Abdeckflächen sowie mit Versteifungsrippen im Bereich der Schalthebelaufnahme versehen ist.

Außerdem sind Schaltgehäuse bekannt, die vollständig aus Stahl- oder Aluminiumlegierungen bestehen. Derartige Ganzmetallkonstruktionen sind zu schwer und zu teuer, um in kraftstoffsparenden und kostengünstigen Fahrzeugen einsetzbar zu sein. Die sogenannten Kunststoffgehäuse haben dagegen den Nachteil, daß diese mechanisch nur gering belastbar sind, weshalb aufwendige Versteifungsstrukturen und Einlegeteile aus Metall, speziell an den Befestigungspunkten zur Fahrzeugstruktur, notwendig sind. Dies macht die Herstellung und Verwendung von Kunststoffgehäusen unvorteilhaft.

Die Aufgabe der Erfindung besteht daher darin, ein Schaltgehäuse für eine Getriebeschaltvorrichtung vorzustellen, das sehr leicht und dennoch stabil sowie kostengünstig herstellbar ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Demgemäß besteht das Lägergehäuse für den Schalt- oder Wählhebel aus zwei Materialkomponenten, wobei die Tragstruktur aus miteinander verbundenen profilförmigen Strängen aus einem Metallwerkstoff oder einem faserverstärkten Kunststoff besteht, deren Zwischenräume von einem leichten Kunststoff oder gummielastischen Material derart dünnwandig abgedeckt sind, daß zwischen den Rippenprofilen Gehäusewände ausgebildet sind. Als Kunststoffmaterial kann beispielsweise ein Kunststoffrezyklat eingesetzt werden, das mit dem Tragstrukturmaterial vorzugsweise in einem automatisiertem Spritzgießvorgang verbunden wird.

Zum besseren Verständnis der Erfindung ist der Beschreibung die Zeichnung eines Ausführungsbeispiels der Erfindung beigelegt. In ihr zeigen
- Figur 1: eine schematische Seitenansicht des Schaltgehäuses,
- Figur 2: eine Draufsicht des Schaltgehäuses, sowie
- Figur 3: eine Querschnittsdarstellung gemäß der Position AA gemäß Figur 1.

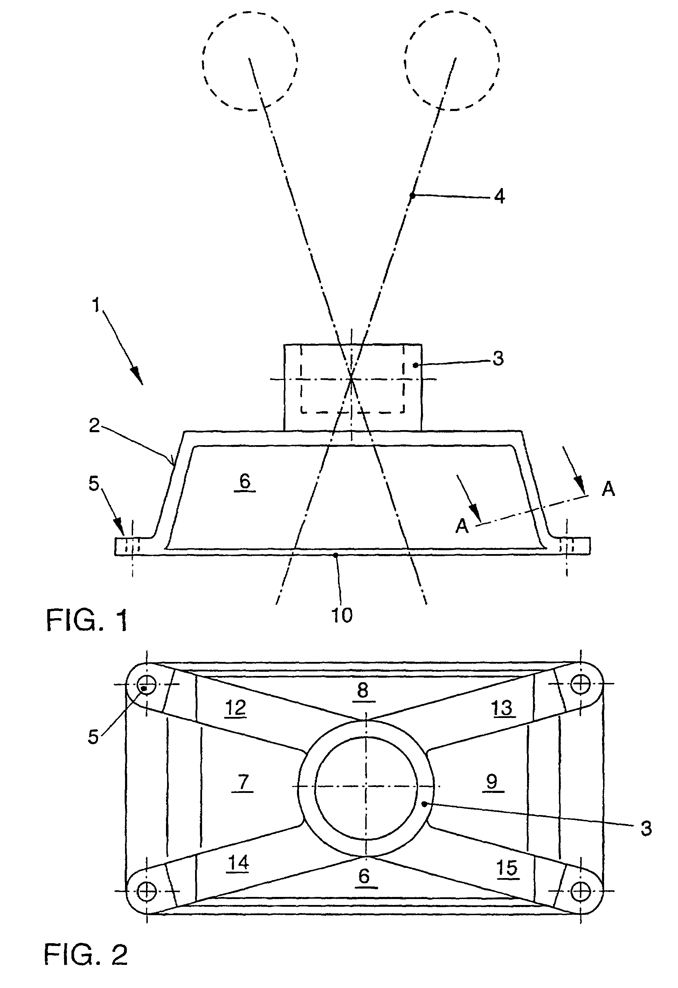

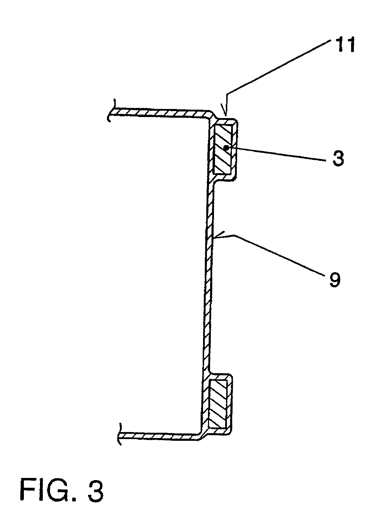

Das in Figur 1 mit 1 bezeichnete Lagergehäuse für einen Getriebeschalthebel 4 besteht hier aus einer etwa spinnenförmigen Tragstruktur 2, die in diesem Ausführungsbeispiel aus Magnesium-Bandprofilen aufgebaut ist. In ihrem oberen Bereich trägt die Tragstruktur 2 eine Schalthebellagervorrichtung 3, in der der hier schematisch dargestellte Schalthebel 4 vorzugsweise in einem Kugelgelenk schwenkbar gelagert ist. Zur Abdichtung des Fahrzeuginnenraums und des Schalthebellagers sind die Zwischenräume zwischen den Bandprofilen 12 bis 15 der Tragstruktur 2, wie der Querschnittsdarstellung gemäß Figur 3 entnehmbar ist, durch Zwischenwände 6 bis 9 aus Kunststoff oder einem gummielastischen Material geschlossen. Da die Wände lediglich zur Schmutzabweisung und Geräuschdämmung dienen, können sie vorzugsweise aus preiswerten Kunststoffen wie etwa Kunststoffrezyklaten hergestellt werden. Dabei kann vorgesehen sein, daß die Tragstrukturelemente 12 bis 15 von diesem Wandbildungsmaterial 11 umspritzt werden (Fig. 3).

Das Schaltgehäuse 1 kann auch über einen Boden 10 aus dem genannten Wandmaterial verfügen, der entsprechende Durchführungen für die Getriebeschaltstangen oder Schaltseilzüge aufweist.

Ein Blick auf Figur 2 zeigt, daß im Bereich der Befestigungspunkte des Gehäuses 1 Bohrungen 5 in dem Bandmaterial 12 bis 15 vorgesehen sind, durch die Befestigungsmittel führbar und mit dem Fahrzeugboden oder anderen Fahrzeugstrukturen verbindbar sind.

Wenngleich in diesem Ausführungsbeispiel die Tragstruktur als aus Magnesiumbandmaterial bestehend beschrieben wurde, kann es sich bei diesem Tragstrukturmaterial auch um Aluminium- oder Stahllegierungen handeln. Es ist aber auch denkbar, daß ein mit Kohlenstoff- oder Aramidfasem verstärkter Kunststoff zum Einsatz kommt.

## Patentansprüche

1. Lagergehäuse für eine Getriebeschalt- oder Wählvorrichtung, mit einer Tragstruktur für ein Schalthebellager (3), **dadurch gekennzeichnet, daß** die Tragstruktur (2) aus profilförmigen und miteinander verbundenen Strängen (12 - 15) aus Metall oder aus einem Faserverbundwerkstoff besteht, deren Zwischenräume zur Bildung von Gehäusewänden (6 bis 10) von einem Kunststoffmaterial oder einem gummielastischen Material abgedeckt sind.

2. Lagergehäuse nach Anspruch 1, **dadurch gekennzeichnet, daß** die profilförmigen Stränge der Tragstruktur (2) aus einer Aluminium-, einer Magnesium- oder einer Stahllegierung bestehen.

3. Lsigergehäuse nach Anspruch 1, **dadurch gekennzeichnet, daß** die profilförmigen Stränge der Tragstruktur (2) aus einem mit Kohlenstoff- oder Aramidfaser verstärkten Kunststoff bestehen.

4. Lagergehäuse nach einem der Ansprüche 1 bis 3, **dadurch gekennzeichnet, daß** die profilförmigen Stränge der Tragstruktur (2) aus Band-, Rohr- oder Rechteckprofilen (12 bis 15) bestehen.

5. Lagergehäuse nach einem oder mehreren der Ansprüche 1 bis 4, **dadurch gekennzeichnet, daß** die profilförmigen Stränge der Tragstruktur (2) von dem Kunststoffmaterial oder dem gummielastischen Werkstoff umspritzt sind.

6. Lagergehäuse nach einem oder mehreren der Ansprüche 1 bis 5, **dadurch gekennzeichnet, daß** die Tragstruktur (2) wenigstens vier Streben (12 - 15) aufweist, die in ihren Endbereichen Bohrungen (5) zur Aufnahme von Befestigungsmitteln aufweisen, und daß die Tragstruktur ein Schalthebellager (3) trägt.

## Claims

1. Bearing housing for a gear-change or selector device, having a supporting structure for a gear-change lever bearing (3), **characterized in that** the supporting structure (2) comprises profiled sections (12-15) which are connected to one another and consist of metal or of a fibre composite material whose intermediate spaces are covered by a plastic material or an elastomeric material in order to form housing walls (6 to 10).

2. Bearing housing according to Claim 1, **characterized in that** the profiled sections of the supporting structure (2) consist of an aluminium, a magnesium or a steel alloy.

3. Bearing housing according to Claim 1, **characterized in that** the profiled sections of the supporting structure (2) consist of a plastic reinforced with carbon fibre or aramide fibre.

4. Bearing housing according to one of Claims 1 to 3, **characterized in that** the profiled sections of the supporting structure (2) consist of strip-type, tubular or rectangular profiles (12 to 15).

5. Bearing housing according to one or more of Claims 1 to 4, **characterized in that** the profiled sections of the supporting structure (2) are encapsulated, by injection moulding, by the plastic material or the elastomeric material.

6. Bearing housing according to one or more of Claims 1 to 5, **characterized in that** the supporting structure (2) has at least four struts (12-15) which have holes (5) in their end regions for receiving fastening means, and **in that** the supporting structure supports a gear-change lever bearing (3).

## Revendications

1. Boîte de support pour un dispositif de changement ou de sélection de vitesses, comprenant une structure porteuse pour un support de levier de vitesses (3), **caractérisée en ce que** la structure porteuse (2) se compose de tronçons (12 - 15) de forme profilée et connectés les uns aux autres, en métal ou en un matériau composite renforcé par des fibres, dont les espaces intermédiaires pour la formation des parois de la boîte (6 à 10) sont recouverts par un matériau en plastique ou un matériau en plastique élastomère.

2. Boîte de support selon la revendication 1, **caractérisée en ce que** les tronçons de forme profilée de la structure porteuse (2) se composent d'un alliage d'aluminium, de magnésium ou d'acier.

3. Boîte de support selon la revendication 1, **caractérisée en ce que** les tronçons de forme profilée de la structure porteuse (2) se composent d'un plastique renforcé par des fibres de carbone ou d'aramide.

4. Boîte de support selon l'une quelconque des revendications 1 à 3, **caractérisée en ce que** les tronçons de forme profilée de la structure porteuse (2) se composent de profilés en bande, tubulaires ou rectangulaires (12 à 15).

5. Boîte de support selon l'une ou plusieurs des revendications 1 à 4, **caractérisée en ce que** les tronçons de forme profilée de la structure porteuse (2) sont recouverts par pulvérisation du matériau en plastique ou du matériau en plastique élastomère.

6. Boîte de support selon l'une ou plusieurs des revendications 1 à 5, **caractérisée en ce que** la structure porteuse (2) présente au moins quatre renforts (12 - 15) qui présentent, dans leur zones d'extrémité, des alésages (5) pour recevoir des moyens de fixation, et **en ce que** la structure porteuse porte un support de levier de vitesses (3).
